# EUROPEAN PATENT SPECIFICATION

(11) **EP 0 913 682 B1**
(45) Date of publication and mention of the grant of the patent: **11.04.2007**
(21) Application number: 98203701.2
(22) Date of filing: 03.11.1998
(51) Int. Cl.: G01N 21/89, H04N 1/38, G11C 27/02

(54) **Apparatus and method for optically scanning a surface**
Vorrichtung und Verfahren zur optischen Abtastung einer Oberfläche
Dispositif et procédé de balayage optique d'une surface

(30) Priority: 03.11.1997 NL 1007435
(43) Date of publication of application: 06.05.1999
(73) Proprietor: FUJIFILM Manufacturing Europe B.V., 5047 TK Tilburg (NL)
(72) Inventor: Korngold, Bruno Alexander, 5151 XE Drunen (NL); de Kort, Christianus Johannes Maria, 5735 KD Aarle-Rixtel (NL)
(74) Representative: Prins, Adrianus Willem

(56) References cited:
- US-A- 3 958 127
- US-A- 4 538 915
- US-A- 4 590 520

## Description

This invention relates to an apparatus for scanning a surface of an article, such as paper or a coated carrier material, using at least one light ray, comprising: a light source for scanning the article, using the light ray, according to a pattern of line sections located next to each other, with each line section being scanned from a beginning of that line section to the end of that line section; a receiver device for detecting the light ray reflected by the article or transmitted by the article, the receiver device generating a receiver signal representing the detected light ray; a processing device for processing the receiver signal, and a sample and hold circuit, wherein the sample and hold circuit:
- samples and holds a receiver signal value valid at a moment when a first line section of the line sections is scanned; and
- feeds the held receiver signal value to the processing device during an initial period in which the beginning of a second line section following the first line section is scanned.

This invention further relates to a method for scanning a surface of an article, such as paper or a coated carrier material, using at least one light ray, wherein the article is scanned, using the light ray, according to a pattern of line sections located next to each other, such that each line section is scanned from a beginning of that line section to the end of that line section, the light ray reflected by the article or transmitted by the article is detected, and a receiver signal representing the detected light ray is generated, while further utilizing a processing device for processing the receiver signal, wherein:
- a receiver signal value valid at a moment when a first line section of the line sections is scanned, is sampled and held; and
- the held receiver signal value is fed to the processing device during an initial period in which the beginning of a second line section following the first line section is scanned.

Such an apparatus and method are known per se and are typically used for scanning a continuously moving sheet, such as photographic paper, a coated base material or the like. The sheet is scanned in a direction perpendicular to the direction of travel of the sheet to detect any defects of the sheet. The light ray is either reflected via the surface or transmitted via the sheet. The processing device processes the receiver signal to assess if the sheet exhibits any unacceptable defects, such as a projection or a cavity at the surface of the sheet, an inclusion in the sheet, a coating defect on the surface or a dust particle adhering to the sheet. When the receiver signal undergoes an undue change, for instance per unit of time, it can be concluded that a defect is present.

In the known apparatus and method, at the moment when the receiver signal is sampled and held, the end of the first line section is scanned. This means that during the second period, in which the beginning of a next, second line section is scanned, the instantaneous receiver signal is applied to the processing device together with a sampled value of the receiver signal associated with the end of the first line section. The reason for this is that the electronics can stabilize the signal of the processing device faster, so that the detection of faults during the scanning of the second line section can be started sooner, since the fault detection is based on changes in the receiver signal, and by making use of the value of the receiver signal at the end of the first line section in the scanning of the beginning of the second line section, the fault detection can be initiated soon after the scanning of the second line section has been started.

A disadvantage of the known apparatus and method is that at the beginning of the second line section, often pseudo defects are reported. The processing device then seems to detect a defect in the article, whereas further analysis shows no defect to be present.

The object of the invention is to provide a solution to this problem and to that end the invention is characterized, in respect of the apparatus, in that the held receiver signal relates to a reference portion of the first line section located adjacent the beginning of the second line section.

The invention is based on the insight that a more reliable fault detection can be carried out when the reference portion of the first line section is located adjacent the beginning of the second line section. The fact is that if such is not the case, there is a good chance that the reference portion yields a receiver signal that deviates strongly from the receiver signal associated with the beginning of the second line section. These deviations can arise, for instance, as a result of a slow variation in the transverse profile of the article. Such a slow variation does not involve any defect of the carrier material and/or coating layer, but may yield a real defect signal at the end of the first line section. This is still detected as a defect because the processing device assesses the difference between the receiver signal associated with the reference portion and the receiver signal associated with the beginning of the second line section as being too great. In fact, the processing device often comprises a threshold circuit whose threshold is determined by the level of the receiver signal previously applied to the threshold circuit. When the threshold of the threshold circuit is (partly) determined by a reference portion of the first line section which, at a moment when the beginning of the second line section is scanned, lies adjacent to the beginning of the second line section, as a rule only real defects will be detected.

A further advantage of the invention is that a greater portion of the line sections being scanned can be used for carrying out the fault detection. In other words, the inspection width can be enlarged with respect to the inspection width that is used in the known apparatus.

In particular, the first and second line sections are scanned in the same direction, with the reference portion of the first line section lying at the beginning of the first line section. According to another embodiment, the first and second line sections are scanned in mutually opposite directions. In that case, the reference portion of the first line section lies at the end of the first line section, so that it is ensured again that the reference portion of the first line section lies adjacent the beginning of the second line section.

A further advantage of the present invention is that noise in the receiver signal does not affect the operation of the processing device because in the sample and hold circuit use can be made of a capacitor with a relatively large capacitance. This capacitor filters out such noise. Further, the receiver device thus comprises a higher sensitivity to small defects.

The method according to the invention is characterized in that the held receiver signal relates to a reference portion of the first line section located adjacent the beginning of the second line section.

All this will be further explained with reference to the drawings, wherein:
Fig. 1 is a diagrammatic representation of an apparatus for scanning a surface of an article using a light ray;
Fig. 2 shows a sample and hold circuit, known per se, which can be applied in the apparatus of Fig. 1;
Fig. 3 is a diagrammatic representation of a pattern of line sections located next to each other, according to which the apparatus according to Figs. 1 and 2 can scan the article;
Fig. 4 is a diagrammatic representation of the operation of the sample and hold circuit according to Fig. 2;
Fig. 5 is a sample and hold circuit according to the invention which can be used in the apparatus according to Fig. 1;
Fig. 6 shows a pattern of line sections located next to each other, according to which the apparatus according to Figs. 1 and 5 can scan the article;
Fig. 7 is a schematic illustration of the operation of the sample and hold circuit according to Figs. 1 and 5 when the article is scanned according to Fig. 6;
Fig. 8 shows an alternative pattern according to which the apparatus according to Figs. 1 and 5 can scan the article; and
Fig. 9 is a schematic representation of the operation of the apparatus according to Figs. 1 and 5 when an article is scanned according to the pattern of Fig. 8.

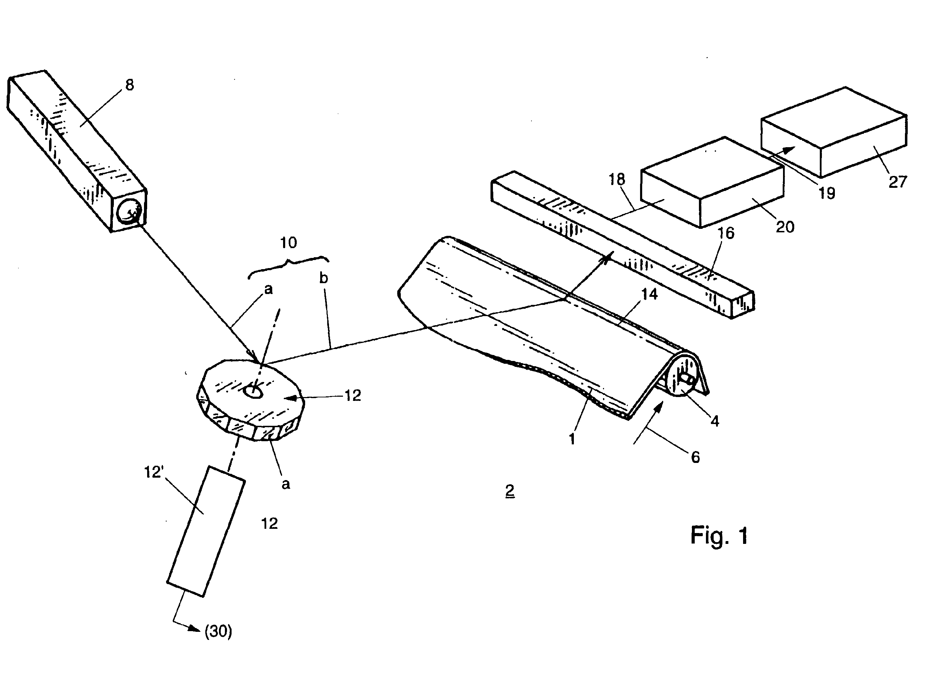

First, referring to Figs. 1-4, an apparatus known per se for scanning a surface of an article using a light ray will be discussed. The article can consist of paper, a carrier material provided with coating, and the like.

An article 1 in the form of a material which is being advanced as a sheet and which is to be examined using the apparatus as represented in Fig. 1, is supported and bent by a supporting roller 4 and continuously advanced in longitudinal direction, indicated by an arrow 6. The apparatus 2 comprises a laser light source 8 which emits a light beam 10. The laser light beam 10 is reflected by a rotary polygon mirror 12 which in this example has the shape of a dodecagonal prism with reflecting facets 12a.

The polygon mirror 12 receives the incident laser light beam 10a and directs a scanning beam 10b for scanning the article 1 along a line section 14. The scanning beam is reflected by the article 1. The scanning beam, which upon reflection is modulated by the article 1, strikes a line photo receiver device 16, which detects the reflected amount of light and generates a receiver signal O representing the detected light ray. The receiver signal is fed via lines 18, 19 and a sample and hold circuit 20 to a processing device 22 for processing the receiver signal.

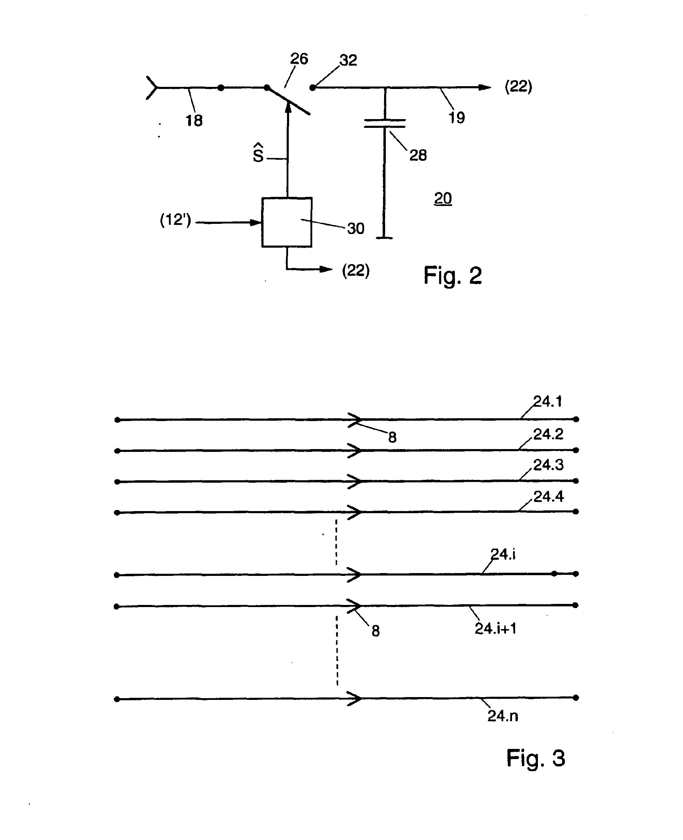

When the polygon mirror 12 is driven clockwise while the article 1 is being advanced in the direction of the arrow 6, the article is scanned according to the pattern of line sections 24.i (i = 1, 2, 3, ...) located next to each other, as schematically shown in Fig. 3. Each line section 24.i is scanned from a beginning of the line section to the end of the line section. In this example, the line sections 24.i are each scanned in the same direction, that is, from left to right in the direction of the arrows 8. Further, in this example, the line sections are each of approximately the same length and the line sections are each at least substantially straight. However, the line sections can also be bent and have mutually different lengths. Furthermore, in this example the lines sections are directed at least substantially parallel to each other. However, this is not essential to the invention either.

Fig. 2 schematically shows a possible further elaboration of the sample and hold device 20 of Fig. 1. The sample and hold circuit 20 comprises switching means 26, a capacitance 28 and a timing circuit 30. The switching means consist, in this example, of a single switch 26, to which the output signal of the receiver device 16 is applied via line 18. The switch 26 is controlled by the timing circuit 30. An output 32 of the switch 26 is connected to mass via the capacitance 28. The junction of the capacitance 28 and the output 32 is connected to the processing unit 22 via line 19. The capacitance 28 has a value of 50 pF.

The operation of the device according to Figs. 1-4 is as follows.

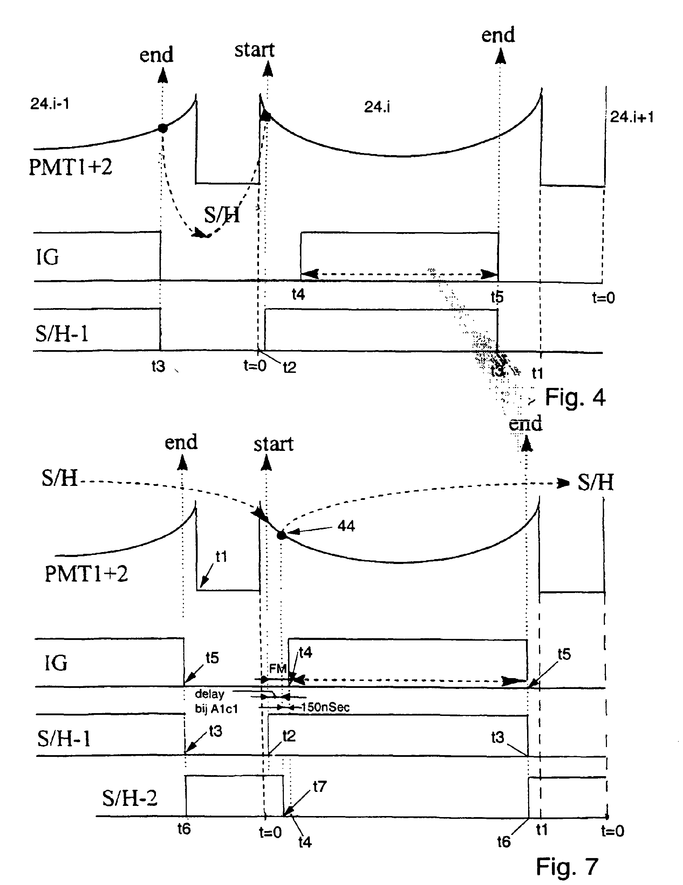

As stated, the article is scanned according to the pattern of Fig. 3. In this connection, time t = 0 is defined as being the time when the scanning of respective line sections 24.i (i = 1, 2, 3, ..., n) is commenced. Further, time t = t₁ is defined as the time with respect to time t = 0 when the scanning of the line 24.i is ended. Further, at time t = t₂ the switch 26 is closed during the scanning of the line section 24.i (S₂₆ = 1, see Fig. 4). The switch 26 subsequently remains closed until time t = t₃ is reached. This means that at time t = t₃ the switch is opened again (S₂₆ = 0, see Fig. 4). Further, at time t = t₄ the processing unit 22 starts to process the signal representing the detected light ray, obtained upon the scanning of line section 24.i and applied to the processing unit 22 via line 19 for the purpose of detecting faults on the article 1 (V = 1, see Fig. 4). At time t = t₅ (V = 0, see Fig. 4), the processing device 22 ends the further processing of the receiver signal O obtained upon scanning of the line section 24.i. In this example, t₃ = t₅.

The timing circuit 30 generates control signals S which are applied to the switch 26 and the processing device 22 for opening and closing the switch 26 and for stopping and starting the signal processing by processing device 22. The polygon mirror 12 has its own generator 12' which generates synchronization signals for the timing circuit 30.

When the line section 24.i is being scanned, the receiver signal is supplied to the capacitance 28 during the period t₂ to t₃. The capacitance will thereby be charged up to the level of the receiver signal applied, and then follows the receiver signal. Also, during the period t₄ to t₅ associated with the line 24.i, the relevant receiver signal is processed by the processing device 22 for detecting faults. When at time t = t₃ the switch 26 is opened, also the processing of the receiver signal by the processing device 22 is ended. This has as a consequence that the capacitance 28 holds the receiver signal such as it has been generated approximately at time t = t₃ upon the scanning of the line 24.i. Between time t = t₃ and t = t₁, associated with the period in which the last portion of the line section 24.i is scanned, the receiver signal is no longer processed inasmuch as the switch 26 is opened. However, from time t = t₃ associated with the line section 24.i to time t = t₂ associated with the line section 24.(i+1), the signal held by the capacitance 28 is supplied to the processing device 22. Subsequently, at time t = t₂ associated with the line section 24.(i+1), the switch 26 is closed again. This means that as from that moment, the receiver signal is applied to the processing device 22 together with the value S/H (shown in dots in Fig. 4) of the receiver signal, held by the capacitance 28. From time t = t₄ associated with the line section 24.(i+1) the processing device is then activated so as to further process the signals applied, for the purpose of detecting faults. Because during the period from time t = t₃ associated with the line section 24.i to time t = t₂ associated with the line section 24.(i+1), the signal held by the capacitance 28 is applied to the processing device 22, this has as an effect that in scanning the beginning of a new line section 24.(i+1) the processing device 22 can be sooner activated for the further processing of the receiver signal. The processing device 22, known per se, is stabilized sooner.

As stated, the processing device 22 detects defects on the basis of changes occurring in the signal applied to the processing device 22. A problem presenting itself in the above-described known apparatus is that the processing device 22 signals defects, in particular immediately after time t = t₄, which defects prove not to be present in the product upon further inspection. According to the insight of the invention, this is found to be caused by the circumstance that the receiver signal at time t = t₃ associated with the line section 24.i, that is, the value of the receiver signal that is held to be applied, during the scanning of the next line section 24.(i+1), to the processing device 22, together with the instantaneous receiver signal associated with the line section 24.(i+1), deviates to a large extent from this instantaneous receiver signal associated with the line section 24.(i+1). In other words, the surface structure of the area of the line section 24.i that is scanned at time t = t₃ deviates from the surface structure of the area of the line section 24.(i+1) that is scanned around time t = t₂. These differences can be so great that a so-called pseudo fault is detected by the processing device 22.

Referring to Figs. 1 and 5-7, presently a first possible embodiment of an apparatus according to the invention that meets the above-described drawbacks will be described.

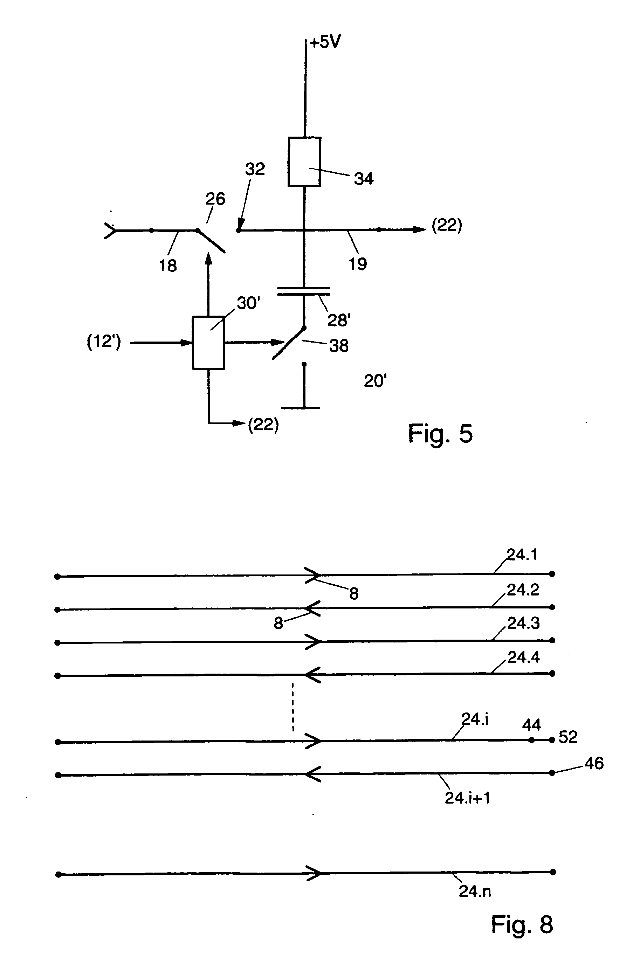

In Fig. 5, parts corresponding to Fig. 2 are provided with the same reference numeral. The sample and hold circuit of Fig. 5 is presently provided with a capacitance 28' which is connected on one side with the output 32 and is connected on the other side to mass via a switch 38. The switch 38 is likewise controlled by the timing circuit 30'. Further, a resistance 34 has been added. The value of the capacitance 28' in this example is 1500 pF, while the value of the resistance 34 is 22 MΩ.

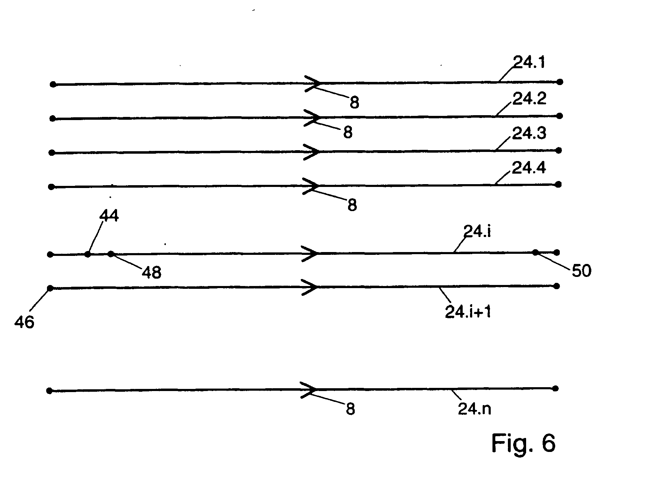

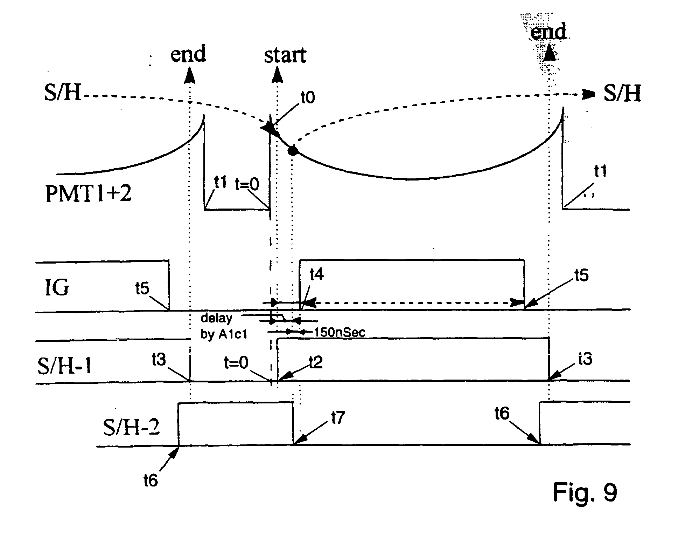

The operation of the apparatus is as follows. Using the apparatus, the article is scanned according to the pattern of line sections as shown in Fig. 6, from which it appears that the line sections are each scanned in the same direction. Fig. 7 schematically shows the various positions of the switches 26 and 38, associated with a first line section 24.i and a second line section 24.(i+1).

In Fig. 7 time t = 0 is defined as the time when a start is made with the scanning of a line section 24.i (i = 1, 2, 3, ..., n). Time t = t₁ is the time when the scanning of the respective line sections 24.i is ended. Further, it appears from Fig. 7 that it holds for each line that at time t = t₂ the switch 26 is closed and that the switch 26 is opened again at time t = t₃. Further, during the scanning of each line section 24.i, at time t = t₄, the processing device 22 is activated for processing the signals applied via line 19. The processing of these signals is ended at time t = t₅. In this example, time t = t₃ is equal to time t = t₅. It appears furthermore from Fig. 7 that it holds for each line section that the switch 38 is closed at time t = t₆ (S₃₈ = 1, see Fig. 7) associated with the line section 24.i and that the switch is subsequently opened again at time t = t₇ (S₃₈ = 0, see Fig. 7) associated with the next line section 24.(i+1). In this example it holds for each line section that time t₆ coincides with time t₃ and time t₅. What also holds is that time t = t₇ associated with the line section 24.i precedes time t = t₄ associated with the line section 24.i (i = 1, 2, 3, ..., n).

In the scanning of the line 24.i, during the period t₂ to t₇, the receiver signal is applied to line 19. Because it holds at the same time that the switch 38 is closed, the capacitance 28' will take the value of the receiver signal. The capacitance 28' then follows the receiver signal. Simultaneously, the capacitance 28' will filter noise from the receiver signal because of the relatively high capacitance value. When subsequently at time t₇ the switch 38 is opened, the capacitance 28' will hold the instantaneous value at the average value of the noise of the receiver signal. In other words, a receiver signal value valid at time t = t₇ while the line section 24.i is scanned, is sampled and held. The held receiver signal here relates to a reference portion 44 of the line section 24.i lying adjacent to a beginning 46 of the next line section 24.(i+1) (see Fig. 6). Thereafter, from time t = t₇ associated with the line section 24.i until time t = t₆ associated with the line section 24.i, the receiver signal is applied directly to the receiver device 22. Because the switch 38 is open during this period, the receiver signal is applied to the processing device 22 over its full bandwidth. Because the receiver signal is applied unfiltered to the processing device 22, the processing device can analyze the receiver signal with a relatively high accuracy. This is in contrast to the device according to Fig. 2, where the receiver signal is filtered by the capacitance 28.

From time t = t₄ associated with the line section 24.i, the processing device 22 in effect starts processing the applied receiver signal. Time t = t₄ corresponds with the position 48 of the line section 24.i. The processing of the receiver signal of the line section 24.i ends at time t₃ = t₅ = t₆. This position is designated by the reference numeral 50 in Fig. 6. From time t = t₆ associated with the line section 24.i, the switch 26 is opened and the switch 38 is closed. This has as an effect that the capacitance 28' is connected to the processing device 22. From that moment, therefore, the sampled and held signal is applied to the processing device. The function of resistance 34 is to compensate the leakage losses of the capacitance 28' in the period from t₂ to t₃. Thereupon, during the scanning of the line section 24.(i+1) at time t = t₂ the switch 26 is closed again. This means that during an initial period t₂ to t₇ in which the beginning of the next line section 24.(i+1) is scanned, the held value S/H (shown in dots in Fig. 7) of the receiver signal is applied to the processing device 22. In this initial period, in addition, the receiver signal is fed to the processing device 22. The processing device 22 can then determine the above-mentioned threshold value relatively fast for further analyzing the receiver signal. Because the held receiver signal relates to the reference portion 44 of the line section 24.i lying adjacent the beginning of the line section 24.(i+1), an uneven surface structure of the article 1 adjacent its edges will not result in a pseudo fault being detected by the processing device 22, since an uneven edge of the product, for instance an elevation, will be present both at the reference portion 44 of the line section 24.i and at the beginning 46 of the line section 24.(i+1). In contrast with what is the case in the device according to Fig. 2, an uneven surface adjacent the edge of the article 1 does not give rise to any substantial differences between the held signal and the receiver signal during the initial period in which the beginning of the next line section 24.(i+1) is scanned. In this example, it holds moreover that the switch 38 is closed when the switch 26 is opened. As a consequence, in this period, the held signal is also applied to the processing device 22. What is thus accomplished is that the processing device 22 has stabilized sooner, with the result that the processing device can be sooner activated for detecting faults than was the case in the device according to Fig. 2. In other words, time t = t₄ is closer to t = 0 in the apparatus according to the invention than in the device according to Fig. 2.

From the foregoing it follows, therefore, that the timing circuit 30 controls the switch 26 and the switch 38 such that
- during the initial period the capacitance and the receiver device are connected in parallel with the processing device;
- during a period after the initial period the receiver device is connected with the processing device while the capacitance is uncoupled from the receiver device and the processing device; and that
- during a period between the periods in which the first and second line section are scanned, the capacitance is connected with the processing device while the receiver device is uncoupled from the capacitance and the processing device.

What holds further is that the timing circuit controls the switching means such that during a period in which the beginning of the first line section is scanned, the capacitance and the receiver device are connected in parallel with the processing device.

What holds furthermore is that the timing circuit controls the switching means such that at least during a period in which the receiver device is uncoupled from the capacitance and the processing device, the capacitance is connected with the processing device.

What holds furthermore is that the timing circuit controls the switching means such that the processing device processes the signals fed to the processing device in respect of the scanning of the second line section, in a signal processing period which commences following the initial period.

What also holds is that the time lapse t₄ to t₇ between the end of the first subperiod (t = t₇) and the beginning of the processing period (t = t₄) is less than the duration of the first subperiod from t₂ to t₇ in this example. The duration of the first subperiod, however, can, if necessary, be accelerated by the use of other components.

It is therefore also conceivable that the duration of the initial period is shorter than the time lapse between the end of the initial period and the start t₄ of the processing period.

In this example, the signal processing period of the line section 24.(i+1) ends upon expiry of the period in which the receiver signal in respect of this line section is applied to the processing device. In other words, t₃ = t₅. It is also possible, however, that time t₅ lies before time t = t₃.

In the example of the apparatus according to Figs. 1, 5-7, it holds that the line sections are each scanned in the same direction. In the example of the apparatus according to Figs. 1, 5, 8 and 9 to be discussed hereinafter, it holds that the line sections are alternately scanned in an opposite direction.

In Figs. 8 and 9, the parts corresponding with Figs. 6 and 7 are provided with the same reference numeral. An important difference is that it holds for each line section that time t = t₅ occurs sooner than time t = t₃. What also holds for each line section is that time t = t₆ lies between times t = t₃ and t = t₅. The consequence is that during the period t = t₆ to t = t₃ of, for instance, the line section 24.i, the capacitance 28' will take the value of the receiver signal. When at time t = t₃ of the line section 24.i the switch 26 is opened, this has as a consequence that the capacitance will hold the instantaneous value of the receiver signal. This held receiver signal will subsequently, in scanning the next line section 24.(i+1) during the period t₂ to t₇, be applied to the processing device together with the receiver signal. Accordingly, during this period, as regards the stabilization of the processing device for the scanning of the line 24.(i+1), the same happens as discussed in relation to Figs. 6 and 7. What holds in this example, however, is that the reference portion 44 of the line section 24.i is located at the end 52 of the line section (see Fig. 8). Because the line sections 24.i and 24.(i+1) are scanned in an opposite direction, it holds that the end 52 of the line section 24.i lies adjacent the beginning 46 of the line section 24.(i+1). This in turn has as a consequence that the reference portion 44 of the line section 24.i lies adjacent the beginning 46 of the line section 24.(i+1). So, in this example too, it holds that pseudo fault reports have at least substantially been eliminated. Of course, it holds that in an entirely analogous manner, adjacent the end of the line section 24.(i+1) the pertinent value of the receiver signal is held in order to use this held signal at the start, that is, at the beginning of the scan of the line section 24.(i+2). The times t₁ to t₇ and the associated operation of the apparatus according to the invention are therefore identical for each scanned line section 24.i (i = 1, 2, 3, ..., n). It holds here that the timing circuit controls the switching means such that during a period in which the beginning of the first line section is scanned and during a period in which the end of the second line section is scanned, the capacitance and the receiver device are connected in parallel with the processing device.

The invention is not in any way limited to the embodiments outlined hereinbefore. Thus, the line sections can each have mutually different lengths. It is also possible that the line sections are not straight, but instead follow a part of a circular path. Such variations are all understood to fall within the scope of the invention.

## Claims

1. An apparatus for scanning a surface of an article such as paper or a coated carrier material using at least one light ray, comprising: a light source for scanning the article, using the light ray, according to a pattern of line sections located next to each other, with each line section being scanned from a beginning of that line section to the end of that line section; a receiver device for detecting the light ray reflected by the article or transmitted by the article, the receiver device generating a receiver signal representing the detected light ray; a processing device for processing the receiver signal, and a sample and hold circuit, wherein the sample and hold circuit:
- samples and holds a receiver signal value valid at a moment when a first line section of the line sections is scanned; and
- feeds the held receiver signal value to the processing device during an initial period in which the beginning of a second line section following the first line section is scanned, **characterized in that** the held receiver signal relates to a reference portion of the first line section that lies adjacent the beginning of the second line section.

2. An apparatus according to claim 1, **characterized in that** the first and the second line sections are scanned in the same direction, with the reference portion of the first line section being located at the beginning of the first line section.

3. An apparatus according to claim 1, **characterized in that** the first and second line sections are scanned in mutually opposite directions, with the reference portion of the first line section being located at the end of the first line section.

4. An apparatus according to any one of the preceding claims, **characterized in that** the line sections are each of approximately the same length.

5. An apparatus according to any one of the preceding claims, **characterized in that** the line sections are each at least substantially straight.

6. An apparatus according to claim 5, **characterized in that** the line sections are directed at least substantially parallel to each other.

7. An apparatus according to any one of the preceding claims, **characterized in that** during the initial period the held value of the receiver signal is fed to the processing device together with the receiver signal.

8. An apparatus according to any one of the preceding claims, **characterized in that** the sample and hold circuit comprises switching means, at least one capacitance and a timing circuit, while the receiver device, the processing device and the capacitance are connected to the switching means, and the timing circuit controls the switching means such that:
- during the initial period the capacitance and the receiver device are connected in parallel with the processing device;
- during a period after the initial period the receiver device is connected with the processing device, while the capacitance is uncoupled from the receiver device and the processing device; and that
- during a period between the periods in which the first and second line sections are scanned, the capacitance is connected with the processing device, while the receiver device is uncoupled from the capacitance and the processing device.

9. An apparatus according to claims 2 and 8, **characterized in that** the timing circuit controls the switching means such that during a period in which the beginning of the first line section is scanned, the capacitance and the receiver device are connected in parallel with the processing device.

10. An apparatus according to claims 3 and 8, **characterized in that** the timing circuit controls the switching means such that during a period in which the beginning of the first line section is scanned and during a period in which the end of the second line section is scanned, the capacitance and the receiver device are connected in parallel with the processing device.

11. An apparatus according to claim 8, **characterized in that** the timing circuit controls the switching means such that at least during a period in which the receiver device is uncoupled from the capacitance and the processing device, the capacitance is connected with the processing device.

12. An apparatus according to any one of claims 8-11, **characterized in that** the timing circuit controls the switching means such that the processing device processes the signals fed to the processing device in respect of the scanning of the second line section, in a signal processing period starting upon expiry of the initial period.

13. An apparatus according to claim 12, **characterized in that** the time lapse between the end of the initial period and the start of the processing period is shorter than the duration of the initial period.

14. An apparatus according to claim 12 or 13, **characterized in that** the signal processing period ends before the end of the period in which the receiver signal in respect of the second line section is applied to the processing device.

15. An apparatus according to claim 12 or 13, **characterized in that** the signal processing period in respect of the second line section ends upon expiry of the period in which the receiver signal in respect of the second line section is applied to the processing device.

16. A sample and hold circuit designed for use and defined in the apparatus according to any one of the preceding claims.

17. A method for scanning a surface of an article such as paper or a coated carrier material, using at least one light ray, wherein the article is scanned, using the light ray, according to a pattern of line sections located next to each other, such that each line section is scanned from a beginning of that line section to the end of that line section, the light ray reflected by the article or transmitted by the article is detected, and a receiver signal representing the detected light ray is generated, while further utilizing a processing device for processing the receiver signal, wherein:
- a receiver signal value valid at a moment when a first line section of the line sections is scanned, is sampled and held; and
- the held receiver signal value is fed to the processing device during an initial period in which the beginning of a second line section following the first line section is scanned, **characterized in that** the held receiver signal relates to a reference portion of the first line section that lies adjacent the beginning of the second line section.

18. A method according to claim 17, **characterized in that** the first and the second line sections are scanned in the same direction, with the reference portion of the first line section being located at the beginning of the first line section.

19. A method according to claim 17, **characterized in that** the first and second line sections are scanned in mutually opposite directions, with the reference portion of the first line section being located at the end of the first line section.

20. A method according to any one of the preceding claims 17-19, **characterized in that** the line sections are each of approximately the same length.

21. A method according to any one of the preceding claims 17-20, **characterized in that** the line sections are each at least substantially straight.

22. A method according to claim 21, **characterized in that** the line sections are directed at least substantially parallel to each other.

23. A method according to any one of the preceding claims 17-22, **characterized in that** during the initial period the held value of the receiver signal is fed to the processing device together with the receiver signal.

## Patentansprüche

1. Vorrichtung zum Abtasten einer Oberfläche eines Artikels, wie zum Beispiel Papier oder ein beschichtetes Trägermaterial, unter Verwendung wenigstens eines Lichtstrahls, umfassend: eine Lichtquelle zum Abtasten des Artikels unter Verwendung des Lichtstrahls entsprechend einem Muster von Linienabschnitten, die nebeneinander angeordnet sind, wobei jeder Linienabschnitt von einem Anfang dieses Linienabschnitts bis zu dem Ende dieses Linienabschnitts abgetastet wird, eine Empfangseinrichtung zum Detektieren des durch den Artikel reflektierten oder gesendeten Lichtstrahls, wobei die Empfangseinrichtung ein Empfangssignal erzeugt, das den empfangenen Lichtstrahl darstellt, eine Verarbeitungseinrichtung zum Verarbeiten des Empfangssignals und einen Abtast- und Haltekreis, wobei der Abtast- und Haltekreis:
- einen Empfangssignalwert, der in einem Moment gültig ist, in dem ein erster Linienabschnitt der Linienabschnitte abgetastet wird, abtastet und hält und
- den gehaltenen Signalwert während einer Anfangsperiode, in der der Anfang eines zweiten Linienabschnitts, der dem ersten Linienabschnitt folgt, abgetastet wird, in die Verarbeitungseinrichtung einspeist, **dadurch gekennzeichnet, dass** sich das gehaltenen Empfangssignal auf einen Bezugsteilbereich des ersten Linienabschnitts bezieht, der an den Anfang des zweiten Linienabschnitts angrenzend liegt.

2. Vorrichtung nach Anspruch 1, **dadurch gekennzeichnet, dass** der erste und der zweite Linienabschnitt in derselben Richtung abgetastet werden, wobei sich der Bezugsteilbereich des ersten Linienabschnitts an dem Anfang des ersten Linienabschnitts befindet.

3. Vorrichtung nach Anspruch 1, **dadurch gekennzeichnet, dass** der erste und der zweite Linienabschnitt in wechselseitig entgegengesetzten Richtungen abgetastet werden, wobei sich der Bezugsteilbereich des ersten Linienabschnitts an dem Ende des ersten Linienabschnitts befindet.

4. Vorrichtung nach einem der vorhergehenden Ansprüche, **dadurch gekennzeichnet, dass** die Linienabschnitte jeder von annähernd derselben Länge sind.

5. Vorrichtung nach einem der vorhergehenden Ansprüche, **dadurch gekennzeichnet, dass** die Linienabschnitte jeder wenigstens im Wesentlichen gerade sind.

6. Vorrichtung nach Anspruch 5, **dadurch gekennzeichnet, dass** die Linienabschnitte wenigstens im Wesentlichen parallel zueinander ausgerichtet sind.

7. Vorrichtung nach einem der vorhergehenden Ansprüche, **dadurch gekennzeichnet, dass** in der Anfangsperiode der gehaltene Wert des Empfangssignals zusammen mit dem Empfangssignal in die Verarbeitungseinrichtung eingespeist wird.

8. Vorrichtung nach einem der vorhergehenden Ansprüche, **dadurch gekennzeichnet, dass** der Abtast- und Haltekreis Schalteinrichtungen, wenigstens eine Kapazität und eine Zeitgeberschaltung umfasst, wobei die Empfangseinrichtung, die Verarbeitungseinrichtung und die Kapazität an die Schalteinrichtung angeschlossen sind und die Zeitgeberschaltung die Schalteinrichtung so steuert, dass:
- während der Anfangsperiode die Kapazität und die Empfangseinrichtung parallel mit der Verarbeitungseinrichtung geschaltet sind,
- während der Periode nach der Anfangsperiode die Empfangseinrichtung mit der Verarbeitungseinrichtung geschaltet ist, während die Kapazität von der Empfangseinrichtung und der Verarbeitungseinrichtung getrennt ist, und dass
- während der Perioden, in denen der erste und der zweite Linienabschnitt abgetastet werden, die Kapazität mit der Verarbeitungseinrichtung geschaltet ist, während die Empfangseinrichtung von der Kapazität und der Verarbeitungseinrichtung getrennt ist.

9. Vorrichtung nach den Ansprüchen 2 und 8, **dadurch gekennzeichnet, dass** die Zeitgeberschaltung die Schalteinrichtung derartig steuert, dass während einer Periode, in der der Anfang des ersten Linienabschnitts abgetastet wird, die Kapazität und die Empfangseinrichtung parallel mit der Verarbeitungseinrichtung geschaltet sind.

10. Vorrichtung nach den Ansprüchen 3 und 8, **dadurch gekennzeichnet, dass** die Zeitgeberschaltung die Schalteinrichtung derartig steuert, dass während einer Periode, in der der Anfang des ersten Linienabschnitts abgetastet wird, und während einer Periode, in der das Ende des zweiten Linienabschnitts abgetastet wird, die Kapazität und die Empfangseinrichtung parallel mit der Verarbeitungseinrichtung geschaltet sind.

11. Vorrichtung nach Anspruch 8, **dadurch gekennzeichnet, dass** die Zeitgeberschaltung die Schalteinrichtung derartig steuert, dass wenigstens während einer Periode, in der die Empfangseinrichtung von der Kapazität und der Verarbeitungseinrichtung getrennt ist, die Kapazität mit der Verarbeitungseinrichtung geschaltet ist.

12. Vorrichtung nach einem der Ansprüche 8 bis 11, **dadurch gekennzeichnet, dass** die Zeitgeberschaltung die Schalteinrichtung derartig steuert, dass die Verarbeitungseinrichtung die in die Verarbeitungseinrichtung in Bezug auf die Abtastung des zweiten Linienabschnitts eingespeisten Signale in einer Signalverarbeitungsperiode verarbeitet, die nach Ablauf der Anfangsperiode beginnt.

13. Vorrichtung nach Anspruch 12, **dadurch gekennzeichnet, dass** der Zeitablauf zwischen dem Ende der Anfangsperiode und dem Beginn der Verarbeitungsperiode kürzer ist als die Dauer der Anfangsperiode.

14. Vorrichtung nach Anspruch 12 oder 13, **dadurch gekennzeichnet, dass** die Signalverarbeitungsperiode vor dem Ende der Periode, in der das Empfangssignal in Bezug auf den zweiten Linienabschnitt auf die Verarbeitungseinrichtung angewendet wird, endet.

15. Vorrichtung nach Anspruch 12 oder 13, **dadurch gekennzeichnet, dass** die Signalverarbeitungsperiode in Bezug auf den zweiten Linienabschnitt nach Ablauf der Periode endet, in der das Empfangssignal in Bezug auf den zweiten Linienabschnitt auf die Verarbeitungseinrichtung angewendet wird.

16. Abtast- und Haltekreis, ausgelegt zur Verwendung und definiert in der Vorrichtung nach einem der vorhergehenden Ansprüche.

17. Verfahren zum Abtasten einer Oberfläche eines Artikels, wie zum Beispiel Papier oder ein beschichtetes Trägermaterial, unter Verwendung wenigstens eines Lichtstrahls, wobei der Artikel unter Verwendung des Lichtstrahls entsprechend einem Muster von Linienabschnitten, die nebeneinander angeordnet sind, so abgetastet wird, dass jeder Linienabschnitt von dem Anfang dieses Linienabschnitts bis zu dem Ende dieses Linienabschnitts abgetastet wird, der durch den Artikel reflektierte oder gesendete Lichtstrahl detektiert wird und ein Empfangssignal, das den detektierten Lichtstrahl darstellt, erzeugt wird, während im Weiteren eine Verarbeitungseinrichtung zum Verarbeiten des Empfangssignals verwendet wird, wobei:
- ein Empfangssignalwert, der in einem Moment gültig ist, in dem ein erster Linienabschnitt der Linienabschnitte abgetastet wird, abgetastet und gehalten wird und
- der gehaltene Signalwert während einer Anfangsperiode, in der der Anfang eines zweiten Linienabschnitts, der dem ersten Linienabschnitt folgt, abgetastet wird, in die Verarbeitungseinrichtung einspeist wird, **dadurch gekennzeichnet, dass** sich das gehaltene Empfangssignal auf einen Bezugsteilbereich des ersten Linienabschnitts bezieht, der an den Anfang des zweiten Linienabschnitts angrenzend liegt.

18. Verfahren nach Anspruch 17, **dadurch gekennzeichnet, dass** der erste und der zweite Linienabschnitt in derselben Richtung abgetastet werden, wobei sich der Bezugsteilbereich des ersten Linienabschnitts an dem Anfang des ersten Linienabschnitts befindet.

19. Verfahren nach Anspruch 17, **dadurch gekennzeichnet, dass** der erste und der zweite Linienabschnitt in wechselseitig entgegengesetzte Richtungen abgetastet werden, wobei sich der Bezugsteilbereich des ersten Linienabschnitts an dem Ende des ersten Linienabschnitts befindet.

20. Verfahren nach einem der vorhergehenden Ansprüche 17 bis 19, **dadurch gekennzeichnet, dass** die Linienabschnitte jeder von annähernd derselben Länge sind.

21. Verfahren nach einem der vorhergehenden Ansprüche 17 bis 20, **dadurch gekennzeichnet, dass** die Linienabschnitte jeder wenigstens im Wesentlichen gerade sind.

22. Verfahren nach Anspruch 21, **dadurch gekennzeichnet, dass** die Linienabschnitte wenigstens im Wesentlichen parallel zueinander ausgerichtet sind.

23. Verfahren nach einem der vorhergehenden Ansprüche, **dadurch gekennzeichnet, dass** in der Anfangsperiode der gehaltene Wert des Empfangssignals zusammen mit dem Empfangssignal in die Verarbeitungseinrichtung eingespeist wird.

## Revendications

1. Appareil destiné à balayer une surface d'un article tel que du papier ou un matériau porteur enduit utilisant au moins un rayon de lumière, comprenant : une source de lumière destinée à balayer l'article, utilisant le rayon de lumière, selon un motif de sections de lignes situées à proximité les unes des autres, chaque section de ligne étant balayée depuis un commencement de cette section de ligne jusqu'à l'extrémité de cette section de ligne ; un dispositif récepteur destiné à détecter le rayon de lumière réfléchi par l'article ou transmis par l'article, le dispositif récepteur générant un signal de récepteur représentant le rayon de lumière détecté ; un dispositif de traitement destiné à traiter le signal de récepteur et un circuit d'échantillonnage et de maintien, dans lequel le circuit d'échantillonnage et de maintien :
- échantillonne et maintient une valeur de signal de récepteur valable à un moment où une première section de ligne parmi les sections de lignes est balayée ; et
- délivre la valeur de signal de récepteur maintenue au dispositif de traitement au cours d'une période initiale dans laquelle le commencement d'une seconde section de ligne suivant la première section de ligne est balayée, **caractérisé en ce que** le signal de récepteur maintenu concerne une portion de référence de la première section de ligne qui se trouve adjacente au commencement de la seconde section de ligne.

2. Appareil selon la revendication 1, **caractérisé en ce que** les première et seconde sections de lignes sont balayées dans la même direction, la portion de référence de la première section de ligne étant située au commencement de la première section de ligne.

3. Appareil selon la revendication 1,
**caractérisé en ce que** les première et seconde sections de lignes sont balayées dans des directions mutuellement opposées, la portion de référence de la première section de ligne étant située au niveau de l'extrémité de la première section de ligne.

4. Appareil selon l'une quelconque des revendications précédentes, **caractérisé en ce que** les sections de lignes sont chacune approximativement de la même longueur.

5. Appareil selon l'une quelconque des revendications précédentes, **caractérisé en ce que** les sections de lignes sont chacune au moins sensiblement droites.

6. Appareil selon la revendication 5,
**caractérisé en ce que** les sections de lignes sont dirigées au moins sensiblement parallèlement entre elles.

7. Appareil selon l'une quelconque des revendications précédentes, **caractérisé en ce qu'**au cours de la période initiale, la valeur maintenue du signal de récepteur est délivrée au dispositif de traitement conjointement avec le signal de récepteur.

8. Appareil selon l'une quelconque des revendications précédentes, **caractérisé en ce que** le circuit d'échantillonnage et de maintien comprend un moyen de commutation, au moins une capacité et un circuit de rythme, alors que le dispositif récepteur, le dispositif de traitement et la capacité sont raccordés au moyen de commutation, et le circuit de rythme commande le moyen de commutation de telle manière que :
- au cours de la période initiale, la capacité et le dispositif récepteur sont raccordés en parallèle au dispositif de traitement ;
- au cours d'une période après la période initiale, le dispositif récepteur est raccordé au dispositif de traitement, alors que la capacité est découplée du dispositif récepteur et du dispositif de traitement ; et de telle manière que
- au cours d'une période entre les périodes dans lesquelles les première et seconde sections de lignes sont balayées, la capacité est raccordée au dispositif de traitement, alors que le dispositif récepteur est découplé de la capacité et du dispositif de traitement.

9. Appareil selon les revendications 2 et 8, **caractérisé en ce que** le circuit de rythme commande le moyen de commutation de telle manière qu'au cours d'une période dans laquelle le commencement de la première section de ligne est balayé, la capacité et le dispositif récepteur sont raccordés en parallèle au dispositif de traitement.

10. Appareil selon les revendications 3 et 8, **caractérisé en ce que** le circuit de rythme commande le moyen de commutation de telle manière qu'au cours d'une période dans laquelle le commencement de la première section de ligne est balayé et au cours d'une période dans laquelle l'extrémité de la seconde section de ligne est balayée, la capacité et le dispositif récepteur sont raccordés en parallèle au dispositif de traitement.

11. Appareil selon la revendication 8,
**caractérisé en ce que** le circuit de rythme commande le moyen de commutation de telle manière qu'au moins au cours d'une période dans laquelle le dispositif récepteur est découplé de la capacité et du dispositif de traitement, la capacité soit raccordée au dispositif de traitement.

12. Appareil selon l'une quelconque des revendications 8 à 11, **caractérisé en ce que** le circuit de rythme commande le moyen de commutation de telle manière que le dispositif de traitement traite les signaux délivrés au dispositif de traitement en rapport avec le balayage de la seconde section de ligne, dans une période de traitement de signal démarrant lors de l'expiration de la période initiale.

13. Appareil selon la revendication 12,
**caractérisé en ce que** le laps de temps entre la fin de la période initiale et le démarrage de la période de traitement est plus court que la durée de la période initiale.

14. Appareil selon la revendication 12 ou 13, **caractérisé en ce que** la période de traitement de signal se termine avant la fin de la période dans laquelle le signal de récepteur en rapport avec la seconde section de ligne est appliqué au dispositif de traitement.

15. Appareil selon la revendication 12 ou 13, **caractérisé en ce que** la période de traitement de signal en rapport avec la seconde section de ligne se termine lors de l'expiration de la période dans laquelle le signal de récepteur en rapport avec la seconde section de ligne est appliqué au dispositif de traitement.

16. Circuit d'échantillonnage et de maintien conçu pour être utilisé, et défini, dans l'appareil selon l'une quelconque des revendications précédentes.

17. Procédé destiné à balayer une surface d'un article tel que du papier ou un matériau porteur enduit, utilisant au moins un rayon de lumière, dans lequel l'article est balayé, en utilisant le rayon de lumière, selon un motif de sections de lignes situées à proximité les unes des autres, de telle manière que chaque section de ligne soit balayée à partir d'un commencement de cette section de ligne jusqu'à l'extrémité de cette section de ligne, le rayon de lumière réfléchi par l'article ou transmis par l'article est détecté et un signal de récepteur représentant le rayon de lumière détecté est généré, tout en utilisant en outre un dispositif de traitement destiné à traiter le signal de récepteur, dans lequel :
- une valeur de signal de récepteur valable à un moment où une première section de ligne parmi les sections de lignes est balayée, est échantillonnée et maintenue ; et
- la valeur de signal de récepteur maintenue est délivrée au dispositif de traitement au cours d'une période initiale dans laquelle le commencement d'une seconde section de ligne suivant la première section de ligne est balayé, **caractérisé en ce que** le signal de récepteur maintenu concerne une portion de référence de la première section de ligne qui se trouve adjacente au commencement de la seconde section de ligne.

18. Procédé selon la revendication 17,
**caractérisé en ce que** les première et seconde sections de lignes sont balayées dans la même direction, la portion de référence de la première section de ligne étant située au niveau du commencement de la première section de ligne.

19. Procédé selon la revendication 17,
**caractérisé en ce que** les première et seconde sections de lignes sont balayées dans des directions mutuellement opposées, la portion de référence de la première section de ligne étant située au niveau de l'extrémité de la première section de ligne.

20. Procédé selon l'une quelconque des revendications précédentes 17 à 19, **caractérisé en ce que** les sections de lignes sont chacune approximativement de la même longueur.

21. Procédé selon l'une quelconque des revendications précédentes 17 à 20, **caractérisé en ce que** les sections de lignes sont chacune au moins sensiblement droites.

22. Procédé selon la revendication 21, **caractérisé en ce que** les sections de lignes sont dirigées au moins sensiblement parallèlement entre elles.

23. Procédé selon l'une quelconque des revendications précédentes 17 à 22, **caractérisé en ce qu'**au cours de la période initiale, la valeur maintenue du signal de récepteur est délivrée au dispositif de traitement conjointement avec le signal de récepteur.
